Europäisches Patentamt

**European Patent Office**

Office européen des brevets

(11) Numéro de publication: **0 222 790**
**B1**

## (12) FASCICULE DE BREVET EUROPEEN

(45) Date de publication du fascicule du brevet: **31.10.90**

(51) Int. Cl.⁵: **F 16 K 31/163,** F 16 H 21/44

(21) Numéro de dépôt: **86902436.4**

(22) Date de dépôt: **28.04.86**

(86) Numéro de dépôt international:
**PCT/FR86/00143**

(87) Numéro de publication internationale:
**WO 86/06812 20.11.86 Gazette 86/25**

(80) Demande divisionnaire 90107043.3 déposée le
**28/04/86.**

(54) Dispositif de liaison à leviers entre un organe d'actionnement et l'arbre d' une vanne rotative.

(30) Priorité: **10.05.85 FR 8507083**

(43) Date de publication de la demande:
**27.05.87 Bulletin 87/22**

(45) Mention de la délivrance du brevet:
**31.10.90 Bulletin 90/44**

(84) Etats contractants désignés:
**AT BE CH DE FR GB IT LI LU NL SE**

(56) Documents cités:
**GB-A-2 005 373**
**US-A-3 927 573**

**Machine Design, vol. 35, nr 11, 9 May 1963, "**
**Scanning the field for ideas", page 219**
**Patents Abstracts of Japan, vol 7, nr 221 (M-246)**
**(1366) 30 September 1983, & JP, A, 58113681 (**
**TOMOE GIJUTSU KENKYUSHO K.K.) 6 July**
**1983**

(73) Titulaire: **DRESSER INDUSTRIES, INC.**
**1600 Pacific Avenue P.O. Box 718**
**Dallas Texas 75221 (US)**

(72) Inventeur: **Sauze, Bernard**
**41, rue du Champ Blanc**
**F-42290 Sorbiers (FR)**

(74) Mandataire: **Le Guen, Louis François**
**CABINET Louis LE GUEN 38, rue Levavasseur**
**B.P. 91**
**F-35802 Dinard Cédex (FR)**

Courier Press, Leamington Spa, England.

## Description

La présente invention concerne un dispositif de liaison à leviers entre l'arbre rotatif d'une vanne à arbre rotatif et un organe de commande du débit et/ou du couple de manoeuvre de ladite vanne, comprenant un premier levier dont une extrémité est couplée de manière rotative audit organe de commande et un second levier dont une extrémité est solidaire dudit arbre rotatif, le premier levier étant relié au second levier par un élément de couplage.

Dans le document US—A—3 927 537, il est décrit un dispositif de liaison à leviers du type mentionné ci-dessus et dans lequel la broche de couplage entre le premier levier et l'organe de commande, par l'intermédiaire de la tige de ce dernier, coulisse entre deux rails parallèles. En ce que concerne cette structure connue de dispositif de liaison, on doit modifier la course de l'organe d'actionnement, par déplacement de deux butées de fin de course, chaque fois que l'on désire modifier l'angle de rotation de l'arbre rotatif de la vanne rotative.

L'objectif de la présente invention consiste à perfectionner un dispositif de liaison à leviers du type mentionné dans l'introduction des présentes de façon qu'une modification de l'angle de rotation de l'arbre rotatif soit possible, sans qu'il soit nécessaire de modifier, voire de limiter, la course de l'organe d'actionnement.

Cet objectif est atteint par l'invention en ce que l'élément de couplage entre les deux leviers peut être déplacé dans une coulisse afin de modifier ledit angle de rotation tout en gardant la course de l'organe d'actionnement inchangée.

Ce perfectionnement suivant l'invention présente l'avantage de permettre une adaptation exacte de l'angle de rotation nécessaire de l'arbre rotatif d'une vanne rotative sans modification, ni échange de l'organe d'actionnement, en déplaçant l'élément de couplage reliant les deux leviers dans la coulisse réalisée dans un des leviers. Ce perfectionnement suivant l'invention permet ainsi de régler ou de modifier les caractéristiques de débit d'une vanne, et ceci sans modifier les caractéristiques de l'organe d'actionnement. En outre, le dispositif de liaison à leviers suivant l'invention permet d'eliminer sans problème des défauts apparus suite à un surdimensionnement ou sousdimensionnement du débit, soit à l'usine du fabricant soit sur des vannes déjà installées. Enfin, le dispositif de liaison à leviers suivant l'invention peut être utilisé pour des vannes de dimensions différentes dont les arbres rotatifs ont des angles de rotation différents.

Les objectifs de l'invention sont atteints par la mise en oeuvre des combinaisons de moyens définies dans les revendications complétant la présente description.

Le dessin joint montre un exemple de réalisation du dispositif de liaison à leviers suivant l'invention. Dans ce dessin:

la Fig. 1 est une coupe transversale du dispositif de liaison à leviers monté sur un vanne, et

la Fig. 2 est une vue, suivant la flèche A de la Fig. 1.

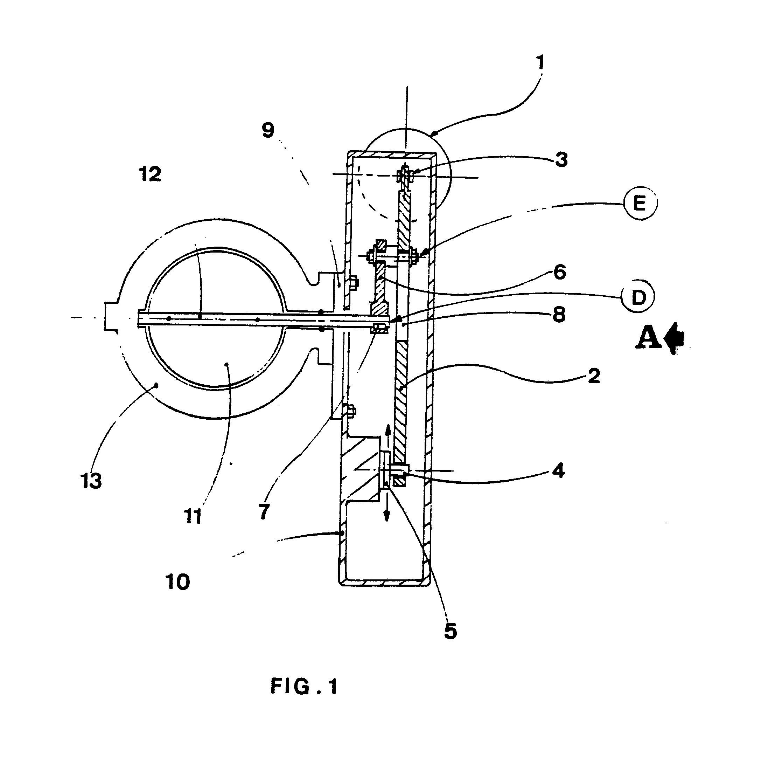

L'organe d'actionnement 1, un vérin par exemple, est relié de façon à pouvoir effectuer un mouvement rotatif, par l'intermédiaire d'une chape 3 mobile dans les deux sens, à une des extrémités d'un premier levier 2. L'autre extrémité de ce levier 2 comporte un axe de rotation 4 couplé à une glissière 5. Cette glissière 5 permet un déplacement linéaire de l'axe de rotation 4 dans le sens des flèches de la Fig. 1, lorsque l'autre extrémité du levier 2 pivote sous l'action de la chape 3 qui effectue un mouvement passant par les points A, B et C.

Le levier primaire 2 est relié, au point E par l'intermédiaire d'un élément de couplage, à un second levier 6 dont l'autre extrémité est solidaire, par l'intermédiaire d'une clavette 7, de l'arbre rotatif 12 de la vanne, au point D. L'élément de couplage reliant les deux leviers 2 et 6 au point E peut être déplacé dans une rainure 8 qui, dans cet exemple de réalisation, est réalisée dans le levier 2.

Le dispositif de liaison à leviers décrit ci-dessus, entre l'organe d'actionnement 1 et arbre 12 de la vanne 13 est disposé dans un boîtier 10 qui est relié à la cage de la soupape 13 au moyen d'une plaque intermédiaire 9.

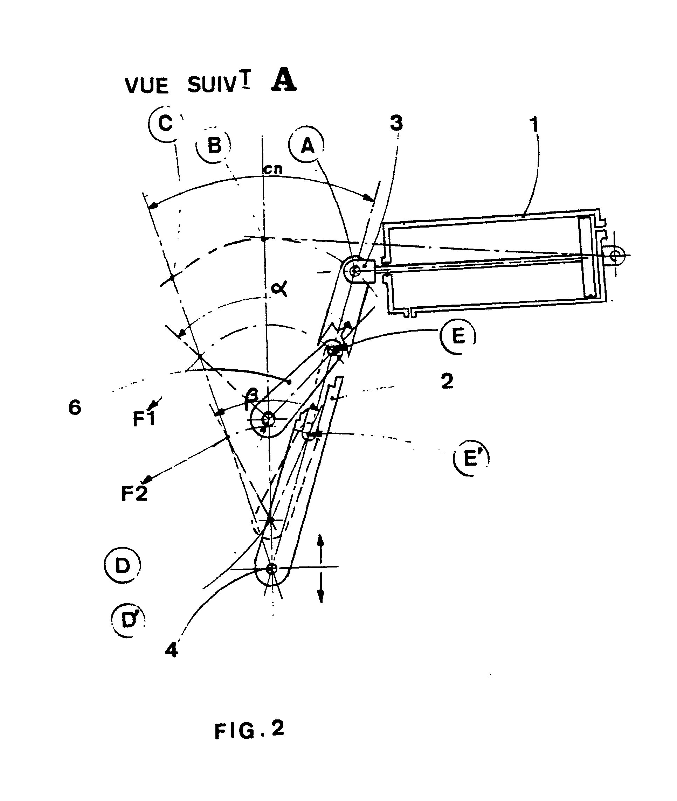

Lorsqu'on déplace l'élément de couplage formant le point E dans la rainure 8 (en déplaçant en même temps la plaque intermédiaire 9 et le boîtier 10), on modifie l'angle de rotation de l'arbre 12. La Fig. 2 montre l'angle de pivotement maximum a. Cet angle de pivotement peut être modifié jusqu'à une valeur minimale, indiquée à la Fig. 2, c'est-à-dire l'angle de rotation B.

Dans ce cas, le point E se déplace jusqu'à une position indiquée par E'. Cette modification de l'angle de rotation modifie dans les mêmes proportions l'angle de rotation de l'arbre 12 de l'organe d'obturation 11 de la vanne 13, ce qui modifie le coefficient de débit nominal du robinet ou de la vanne 13; cette variation d'angle modifie également le couple de manoeuvre F1 ou F2 sur l'arbre 12, et ceci sans modifier les propriétés, soit la course nominale cn, de l'organe d'actionnement 1.

## Revendications

1. Dispositif de liaison à leviers entre l'arbre rotatif (12) d'une vanne à arbre rotatif et un organe de commande (1) du débit et/ou du couple de manoeuvre de ladite vanne, comprenant un premier levier (2) dont une extrémité est couplée de manière rotative (en 3) audit organe de commande (1) et un second levier (6) dont une extrémité est solidaire dudit arbre rotatif (12), le premier levier (2) étant relie de maniere rotative, au point E par l'intermédiaire d'un élément de couplage, au second levier (6) caractérisé en ce que le premier levier (2) comporte un axe de rotation glissant dans une glissière (5), la position du point E étant sélectivement réglable sur le premier levier pour faire varier l'angle de rotation de l'arbre (12), la course de l'organe de commande (1) restant inchangée.

2. Dispositif de liaison suivant la revendication 1, caractérisé en ce que la direction de la glissière (5) est perpendiculaire à l'arbre rotatif (12).

3. Dispositif de liaison suivant la revendication 1 ou 2, caractérisé en ce que ladite glissière (5) est, d'une manière réglable, couplée directement ou indirectement au corps (13) de la vanne et en ce que ledit axe de rotation (4) est solidaire du premier levier (2).

4. Dispositif de liaison suivant la revendication 3, caractérisé en ce qu'il comprend encore un carter (10), renfermant les premier et second leviers (2, 6), qui assure la liaison entre la glissière (5) et le corps (13) de la vanne et qui est lié à l'organe de commande (1), la position dudit carter (10) étant réglable par rapport audit arbre rotatif (12) en fonction de la position dudit point E.

**Patentansprüche**

1. Hebeltrieb zwischen einem Stellantrieb (1) und einer Ventilwelle (12), der die Strömungsrate und/oder das Betriebsdrehmoment dieses Ventils steuert, mit einem ersten Hebel (2), dessen eines Ende drehbar (bei 3) mit dem Stellantrieb (1) gekoppelt ist, sowie einem zweiten Hebel (6), dessen eines Ende integral mit der Ventilwelle (12) ausgebildet ist, wobei der erste Hebel (2) drehbar mit dem zweiten Hebel (6) am Punkt E mit Hilfe eines Kupplungselementes verbunden ist, dadurch gekennzeichnet, daß der erste Hebel (2) eine Drehwelle aufweist, die in einem Schieber (5) gleitet, daß die Position des Punktes E selektiv am ersten Hebel einstellbar ist, um den Drehwinkel der Ventilwelle (12) zu verändern, und daß der Hub des Stellantriebs (1) unverändert bleibt.

2. Hebeltrieb nach Anspruch 1, dadurch gekennzeichnet, daß die Richtung des Schiebers (5) quer zur Ventilwelle (12) verläuft.

3. Hebeltrieb nach Anspruch 1 oder 2, dadurch gekennzeichnet, daß der Schieber (5) einstellbar, direkt oder indirekt mit dem Gehäuse (13) des Ventils gekoppelt ist, und daß die Drehwelle (4) integral mit dem ersten Hebel (2) ausgebildet ist.

4. Hebeltrieb nach Anspruch 3, dadurch gekennzeichnet, daß er ferner ein Gehäuse (10) aufweist, welches den ersten und den zweiten Hebel (2, 6) umschließt, und das ferner die Verbindung zwischen dem Schieber (5) und dem Gehäuse (13) des Ventils bildet und das mit dem Stellantrieb (1) verbunden ist, und daß die Position des Gehäuses (10) bezüglich der Ventilwelle (12) entsprechend der Position des Punktes E einstellbar ist.

**Claims**

1. Lever connection device between the rotary shaft (12) of a rotary shaft valve and a mechanism (1) controlling the flow rate and/or the operating torque of the said valve, comprising a first lever (2), one end of which is coupled rotarily (at 3) to the said control mechanism (1), and a second lever (6), one end of which is integral with the said rotary shaft (12), the first lever (2) being connected rotarily to the second lever (6) at point E by means of a coupling element, characterised in that the first lever (2) comprises a rotary shaft sliding in a slide (5), the position of point E being selectively adjustable on the first lever in order to vary the angle of rotation of the shaft (12), the stroke of the control mechanism (1) remaining unchanged.

2. Connection device according to claim 1 or 2, characterised in that the direction of the slide (5) is perpendicular to the rotary shaft (12).

3. Connection device according to claim 1 or 2, characterised in that the said slide (5) is adjustably coupled, directly or indiretly, to the body (13) of the valve, and in that the said rotary shaft (4) is integral with the first lever (2).

4. Connection device according to claim 3, characterised in that it also comprises a body (10) enclosing the first and second levers (2, 6), which provides the connection between the slide (5) and the body (13) of the valve, and which is connected to the control mechanism (1), the position of the said box (10) being adjustable in relation to the said rotary shaft (12) according to the position of the said point E.

FIG . 1

FIG.2